# EUROPÄISCHE PATENTSCHRIFT

(11) **EP 2 181 493 B1**
(45) Veröffentlichungstag und Bekanntmachung des Hinweises auf die Patenterteilung: **13.03.2013**
(21) Anmeldenummer: 08784888.3
(22) Anmeldetag: 18.07.2008
(51) Int. Cl.: H02K 3/52, H02K 41/02, H02K 15/04, H02K 15/06

(54) **SPULENKÖRPER FÜR EINE LINEARMOTOR-STATOR FÜR EINE AUTOMATISCHE TÜR**
COIL FORMER FOR A LINEAR MOTOR STATOR FOR AN AUTOMATIC DOOR
CORPS DE BOBINE POUR UN STATOR DE MOTEUR LINÉAIRE POUR UNE PORTE AUTOMATIQUE

(30) Priorität: 16.08.2007 DE 102007038848
(43) Veröffentlichungstag der Anmeldung: 05.05.2010
(73) Patentinhaber: Dorma GmbH + Co. KG, 58256 Ennepetal (DE)
(72) Erfinder: BUSCH, Sven, 44227 Dortmund (DE); SCHÜLER, Thomas, 58300 Wetter (DE)
(86) Internationale Anmeldenummer: PCT/EP2008/005909
(87) Internationale Veröffentlichungsnummer: WO 2009/021597

(56) Entgegenhaltungen:
- EP-A- 1 168 570
- EP-A- 1 246 343
- EP-A- 1 376 825
- EP-A- 1 437 817
- JP-A- 59 153 443
- US-A1- 2004 251 752
- US-A1- 2004 263 015
- US-A1- 2005 044 692
- US-A1- 2006 033 395
- US-A1- 2006 087 192
- US-A1- 2007 182 271

## Beschreibung

Die Erfindung betrifft einen Spulenkörper für einen Linearmotor-Stator für eine automatische Tür, wobei der Linearmotor-Stator eine Spulenanordnung aufweist, die bei entsprechender Ansteuerung eine Wechselwirkung mit einem Linearmotor-Läufer bewirken kann, welche Vorschubkräfte hervorruft.

Aus der DE 40 16 948 A1, der DE 196 18 518 C1 und der WO 94/013055 A1 sind Schiebetüren mit Linearmotoren bekannt. Die prinzipielle Anordnung der gezeigten Linearmotoren lässt darauf schließen, dass diese in einem aufwendigen Verfahren einzeln angefertigt werden und der Serienfertigung nicht oder nur schwerlich zugänglich sind.

Die US 2007/0182271 A1 offenbart ein Verfahren zum Herstellen eines Stators für einen Motor mit Innenrotor sowie einen mit diesem Verfahren hergestellten Stator. Ein kreisförmig umlaufender Statorkern weist mehrere Teilkeme auf, die in Umfangsrichtung des Statorkerns angeordnet sind und in Axialrichtung des Rotors gesehen im Wesentlichen T-förmig sind. Sie erstrecken sich mit einem jeweiligen Zahn radial in das Innere des Statorkerns und sind aus Schichtelementen aufgebaut. Die Statorkerne sind radial gemäß dem gesamten Stator angeordnet und werden kontinuierlich bewickelt.

Die EP 1 168 570 A2 beschreibt einen Spulenkörper mit einem Flansch mit einem lappenartigen Vorsprung, um den ein Ende einer Wicklung geschlungen werden kann, sodass eine Spulenwicklung fest in Position gehalten wird, also verhindert ist, dass sich die Wicklung im Gebrauch löst.

Die US 2006/0087192 A1 beschreibt einen Spulenkörper mit flanschartigen Platten mit Drahtarretierungen. Diese Arretierungen umfassen gabelartige Vorsprünge mit einer Nut. Die Vorsprünge können ausgebildet sein, einen elektrischen Kontakt mit dem Wickeldraht bereitzustellen.

Die US 20041251752 A1 beschreibt einen Stator mit Anschlussteilen mit gabelartigen Verbindungsabschnitten. Sie halten einen Zwischenabschnitt eines U-förmigen Mittelpunkt-Anschlussabschnitts, der sich von einem zweiten Ende einer Spule erstreckt.

Es ist daher die Aufgabe der Erfindung, einen Linearmotor oder Teile davon für eine automatische Tür derart weiterzuentwickeln, dass dieser einfacher gefertigt werden kann, wobei dies insbesondere durch eine Automatisierung von wenigstens Teilen der Fertigung erfolgen soll.

Gelöst wird diese Aufgabe durch einen Spulenkörper für einen Linearmotor-Stator für eine automatische Tür mit den im Patentanspruch 2 angegebenen Merkmalen. Vorteilhafte Ausgestaltungen des Gegenstandes des Patentanspruchs 2 sind in den Unteransprüchen angegeben.

Der erfindungsgemäße Spulenkörper für einen Linearmotor-Stator für eine automatische Tür, wobei der Linearmotor-Stator eine Spulenanordnung aufweist, die bei entsprechender Ansteuerung eine Wechselwirkung mit einem Linearmator-Läufer bewirken kann, die Vorschubkräfte hervorruft, weist einen Grundkörper zur Aufnahme eines Wickeldrahtes, um eine Spule zu bilden, und wenigstens einen den Grundkörper stirnseitig abschließenden Flansch auf. Der erfindungsgemäße Spulenkörper ist dadurch gekennzeichnet, dass wenigstens ein Flansch des Spulenkörpers wenigstens eine Drahtaufnahme aufweist, die eingerichtet ist, eine bestimmte Länge des Wickeldrahtes aufzunehmen und zumindest zum Teil wieder freizugeben.

Durch diese erfindungsgemäße Ausgestaltung ist es möglich zu gewährleisten, dass die in einem Spulenstrang des Linearmotor-Stators zu verbauenden Spulen in einer ersten Anordnung, nämlich einer Bewicklungsanordnung, mittels einer Wickelmaschine in einem ununterbrochenen Vorgang bewickelt werden können und danach zur Fertigung des Linearmotor-Stators in eine zweite Anordnung, nämlich eine Bestückungsanordnung, gebracht werden können, ohne den Wickeldraht zu zertrennen. Das bedeutet, dass die gemeinsam gewickelten Spulen bereits linear miteinander verschaltet sind und sich keine Verbindungspunkte zwischen den Einzelspulen eines solchen Spulenstrangs ergeben. Hierdurch wird neben der Ermöglichung einer automatisierten Wicklung der Spulen eines Spulenstrangs noch eine erhöhte Zuverlässigkeit gewährleistet.

Erfindungsgemäß ist also die wenigstens eine Drahtaufnahme vorgesehen, um den Wickeldraht vor und/oder nach einem Bewickeln des Grundkörpers aufzunehmen, und nach einem Abschluss eines gemeinsamen aufeinander folgenden ununterbrochenen Bewickelns mehrerer in einer Bewicklungsanordnung nebeneinander angeordneter Spulenkörper zumindest zum Teil wieder freizugeben, so dass zwischen bewickelten Spulenkörpern eine bestimmte freie Drahtlänge gegeben ist, die sich aus dem freigegebenen Teil des von der Drahtaufnahme aufgenommenen Wickeldrahtes und einem Stück Wickeldraht ergibt, das beim aufeinander folgenden Bewickeln von zwei Spulenkörpern zwischen diesen besteht, so dass die mehreren gemeinsam bewickelten Spulenkörper zur Fertigung des Linearmotor-Stators in einem zur Bewicklungsanordnung unterschiedliche Bestückungsanordnung bringbar sind, ohne den Wickeldraht zu zertrennen.

Hierbei ist die bestimmte freie Drahtlänge vorzugsweise so bemessen, dass mehrere, insbesondere drei, Spulenanordnungen, die jeweils einen ununterbrochenen Wickeldraht aufweisen, ineinander verschachtelt in dem Linearmotor-Stator angeordnet werden können. Dies bedeutet, dass zwischen zwei Einzelspulen einer solchen Spulenanordnung jeweils eine oder mehrere Spulen von einer oder mehreren weiteren Spulenanordnungen angeordnet sind. Es ist also durch die erfindungsgemäße Ausgestaltung des Spulenkörpers nicht nur möglich, dass die Einzelspulen einer Spulenanordnung während der Bewicklung unterschiedlich zueinander ausgerichtet sind, wie bei der Bestückung, d. h., wie in dem fertigen Linearmotor-Stator, ohne den Wickeldraht zu zertrennen, sondern auch eine solche freie Drahtlänge zwischen Einzelspulen, d. h., bewickelten Spulenkörpern, vorzusehen, die ermöglicht, dass die Einzelspulen einer Spulenanordnung nicht direkt nebeneinander liegen müssen, sondern neben Spulen anderer Spulenanordnungen des Linearmotor-Stators liegen können. Durch die aufeinander folgende Ansteuerung der unterschiedlichen Spulenanordnungen wird dann eine Wechselwirkung mit einem Linearmotor-Läufer bewirkt, die Vorschubkräfte hervorruft.

Erfindungsgemäß weist die Drahtaufnahme des Spulenkörpers wenigstens eine Haltevorrichtung auf, die zumindest einen Teil des von der Drahtaufnahme aufgenommenen Wickeldrahts ohne Überwindung eines Entnahmewiderstands freigeben kann. Durch eine solche Haltevorrichtung kann der Wickeldraht während der automatisierten Bewicklung aufgenommen und nach dem Abschluss der Bewicklung der Spulenanordnung unkompliziert ohne weiteres wieder freigegeben werden.

Die Haltevorrichtung weist bevorzugt wenigstens eine über den mit der wenigstens einen Haltevorrichtung versehenen Flansch hervorstehende Nase auf, entlang der oder um die der Wickeldraht geführt werden kann. Dies ist eine besonders einfache Möglichkeit der Ausgestaltung der erfindungsgemäßen Drahtaufnahme, die eine automatisierte Bewicklung von mehreren nebeneinander angeordneten Spulenkörpern ermöglicht und die Anforderung erfüllt, dass der Wickeldraht ohne Überwindung eines Entnahmewiderstands nach der Bewicklung wieder freigegeben werden kann.

Bevorzugt weist die wenigstens eine Nase einen Führungsbereich, entlang dem oder um den der Wickeldraht geführt werden kann, und einen Stützbereich auf, der eine von dem Führungsbereich her auf die Nase wirkende Kraft aufnehmen kann. Diese Ausgestaltung ermöglicht es in besonders einfacher und materialsparender Ausgestaltung, die Festigkeit der Nase so zu gewährleisten, dass die Nase die beim Bewickeln, der Entnahme aus einer Wickelmaschine und dem anschließenden Bestücken eines Linearmotor-Stators darauf wirkenden Kräfte aufnehmen kann, ohne zerstört, z. B. abgeschert, zu werden.

Alternativ oder zusätzlich zu einer solchen Nase kann die Haltevorrichtung erfindungsgemäß vorzugsweise eine Nut aufweisen, entlang der der Wickeldraht geführt werden kann. Auch hierdurch ist eine automatisierte Bewicklung sowie eine Freigabe des Wickeldrahts ohne Überwindung eines Entnahmewiderstands nach Abschluss der Bewicklung möglich.

Bei dem erfindungsgemäßen Spulenkörper weist die Drahtaufnahme vorzugsweise eine Aufnahmeführung auf, die eingangsseitig angeordnet ist, um eine Führung des Wickeldrahts innerhalb der Drahtaufnahme zu unterstützen. Die eingangsseitige Anordnung bedeutet hier insbesondere, dass der Wickeldraht bei der Wicklung zunächst in die Aufnahmeführung eintritt, bevor er weiter innerhalb der Drahtaufnahme verläuft. Eine solche eingangsseitig angeordnete Aufnahmeführung bewirkt, dass der Wickeldraht auf jeden Fall auch bei vorhandenen Fertigungstoleranzen nach Abschluss der Wicklung des Grundkörpers in die Drahtaufnahme läuft.

Bevorzugt besteht die Aufnahmeführung aus einer Ausnehmung des wenigstens einen Flansches, wodurch der Flansch eine Fläche mit verringerter Materialstärke aufweist. Dies ist eine besonders einfache Form der Ausgestaltung der Aufnahmeführung, die durch ein Verdünnen des Flansches erfolgt, wobei der Wickeldraht an einer zwischen dem verdünnten Bereich und der normalen Stärke des Flansches entstehenden Kante entlang geführt wird. Durch diese Ausgestaltung ergibt sich weiter in einfacher Weise eine Materialeinsparung.

Die Ausnehmung des wenigstens einen Flansches, durch die der Flansch eine Fläche mit verringerter Materialstärke aufweist, bewirkt vorzugsweise eine direkte geradlinige Führung von einer Eingangsseite der Drahtaufnahme zu der Haltevorrichtung. Durch diese Ausgestaltung ist eine besonders einfache automatische Bewicklung möglich.

Der erfindungsgemäße Spulenkörper weist vorzugsweise eine Klemmvorrichtung auf, die an dem wenigstens einen Flansch angeordnet ist, der wenigstens eine Drahtaufnahme aufweist, um ein Ende der Spule zu definieren und einen darin aufgenommenen Wickeldraht nicht oder nicht ohne Überwindung eines Entnahmewiderstands freizugeben. Durch eine solche Klemmvorrichtung wird erfindungsgemäß bevorzugt gewährleistet, dass die auf dem Grundkörper gewickelte Spule sich nach Abschluss der Wicklung der Spulenanordnung bei Freigabe zumindest eines Teils des Wickeldrahts, der von der Drahtaufnahme aufgenommen wurde, nicht wieder ohne weiteres abwickelt.

Weiter bevorzugt ist eine Richtung, in der der Wickeldraht durch die Klemmvorrichtung geführt wird, parallel zu einer Richtung, in der der Grundkörper bewickelt wird, wobei sich die Klemmvorrichtung in dieser bevorzugten Ausführungsform mit ihrer Ausgangsseite an die Eingangsseite der Drahtaufnahme anschließt. D. h., der Wickeldraht läuft nach Bewicklung des Grundkörpers durch die Klemmvorrichtung in die Drahtaufnahme. Hierdurch ist eine definierte Anzahl der Wicklungen der auf dem Grundkörper gewickelten Spule gewährleistet, die sich auch nach Fertigstellung der Wicklung nicht ändert, da das Ende der Spulenwicklung von der Klemmvorrichtung gehalten wird und somit bei Freigabe des Wickeldrahts, der in der Drahtaufnahme liegt, nicht abgewickelt wird. Weiter ist durch die parallele Führung des Wickeldrahts in der Klemmvorrichtung in Bezug auf die Bewicklungsrichtung des Grundkörpers gewährleistet, dass eine besonders einfache Bewicklung des Spulenkörpers mittels einer Wickelmaschine erfolgen kann.

Bevorzugt besteht die Klemmvorrichtung aus einer Drahtführung und zwei Widerhaken, wobei ein Wickeldraht mit geringem oder keinem Widerstand an den Widerhaken vorbei in die Drahtführung eingelegt werden kann und nicht oder nur entgegen den Entnahmewiderstand gegen die Wirkung der Widerhaken aus der Drahtführung entnommen werden kann. Diese Ausgestaltung ermöglicht ein automatisiertes Einlegen des Wickeldrahtes in die Drahtführung und gewährleistet, dass der in die Drahtführung eingelegte Wickeldraht beim z. B. manuellen Bestücken des Linearmotor-Stators nicht aus der Drahtführung entnommen wird, wodurch die definierte Länge der gewickelten Spule erhalten bleibt.

Weiter bevorzugt weist die Drahtführung ausgangsseitig eine Abrundung auf, entlang der ein Wickeldraht aus der Klemmvorrichtung geführt wird. Diese Ausgestaltung verhindert ein Abknicken des Wickeldrahtes beim Bewickeln des Spulenkörpers und auch beim Bestücken des Linearmotor-Stators.

Der erfindungsgemäße Spulenkörper weist bevorzugt eine Draht-Zuführhilfe auf, die an wenigstens einem Flansch angeordnet ist, der eine Drahtaufnahme aufweist, um einen Anfang der Spule zu definieren. Durch eine solche Draht-Zuführhilfe kann gewährleistet werden, dass der Wickeldraht, der in die Drahtaufnahme eines Spulenkörpers eingelegt ist oder mit dem die Wicklung einer Spulenanordnung begonnen wird, zuverlässig in den folgenden bzw. ersten Spulenkörper so eingelegt wird, dass der Spulenanfang definiert ist und gewährleistet wird, dass der Wickeldraht auf den Grundkörper geführt wird. Dies stellt zusammen mit der Definition des Spulenendes sicher, dass die gewickelte Spule eine bestimmte Anzahl von Wicklungen aufweist.

Vorzugsweise ist bei dem erfindungsgemäßen Spulenkörper der wenigstens eine Flansch, der eine Drahtaufnahme aufweist, so rotationssymmetrisch bezüglich einer Wickelachse des Spulenkörpers ausgestaltet, dass darauf insgesamt zwei Drahtaufnahmen vorgesehen sind. Dies ermöglicht eine besonders einfache Bestückung des Wicklungsautomaten, insbesondere, wenn der wenigstens eine Flansch und/oder der Grundkörper eine rechteckige Form aufweisen, da in diesem Falle bei der Bestückung nicht so stark auf die Orientierung des Spulenkörpers geachtet werden muss. Bevorzugt weisen bei dem erfindungsgemäßen Spulenkörper der Grundkörper und der wenigstens eine den Grundkörper stimseitig abschließende Flansch einen Durchbruch für einen Spulenkern auf, wodurch mehrere Spulenkörper zum gemeinsamen aufeinander folgenden Bewickeln auf einem durch ihre Durchbrüche geführten Wickeldorn fixiert werden können. Dies ermöglicht, dass in einfacher Weise zumindest alle Spulenkörper eines Spulenstrangs auf einem durch ihre Durchbrüche geführten Wickeldom fixiert werden und gemeinsam bewickelt werden können, ohne den Wickeldraht zu zertrennen. Durch die Ausgestaltung des Durchbruchs derart, dass sowohl die Aufnahme eines Spulenkerns als auch des Wickeldorns ermöglicht wird, kann die Bestückung der Wickelmaschine mit zu bewickelnden Spulenkörpern in einer besonders einfachen Weise erfolgen, denn der für den Spulenkern vorgesehene relativ große Durchbruch des Grundkörpers dient ebenfalls zur Aufnahme und Ausrichtung des Spulenkörpers in der Wickelmaschine.

Bevorzugt weist der wenigstens eine Flansch des erfindungsgemäßen Spulenkörpers eine Führungsvorrichtung auf, die gewährleistet, dass einander anstoßende direkt nebeneinander liegende Spulenkörper, deren korrespondierende Flansche in einer Ebene liegen, definiert zueinander ausgerichtet sind. Durch dieses erfindungsgemäß bevorzugte Merkmal wird gewährleistet, dass sich in der Bestückungsanordnung befindliche erfindungsgemäße Spulenkörper definiert zueinander ausgerichtet sind, ohne dass notwendigerweise eine zusätzliche Ausrichtung der sich auf den Spulenkörpern befindlichen Einzelspulen eines oder mehrerer Spulenstränge zueinander erfolgen muss.

Bevorzugt weist die wenigstens eine Führungsvorrichtung eine in dem wenigstens einen Flansch ausgebildete Aussparung auf, in die ein Vorsprung eines in einer Bestückungsanordnung direkt benachbarten Spulenkörpers eingreifen kann. Auf diese Weise kann unter Gesichtspunkten der Materialeinsparung in einfacher Weise eine Führungsvorrichtung gebildet werden.

Weiter bevorzugt ist der Vorsprung mittels der Haltevorrichtung gebildet. Auf diese Weise kann ein bei dem automatisierten Bewickeln zur Definition der freien Drahtlänge verwendetes Element in der Bestückungsanordnung zur Ausrichtung der Spulenkörper dienen und somit eine doppelte Funktion erfüllen.

Der erfindungsgemäße Spulenkörper für einen Linearmotor-Stator für eine automatische Tür wird erfindungsgemäß vorzugsweise zum Antrieb mindestens eines Türflügels einer Schiebetür eingesetzt, die vorzugsweise als Bogenschiebetür oder Horizontal-Schiebewand ausgebildet ist. Er kann neben diesem Einsatz auch zum Aufbau eines Linearmotor-Stators zum Antrieb von Torflügeln oder in Zuführeinrichtungen, Handlingseinrichtungen oder Transportsystemen eingesetzt werden.

Die Erfindung wird nun anhand von Ausführungsbeispielen näher beschrieben.

Dabei zeigen:
- Fig. 1a: eine dreidimensionale Ansicht eines ersten Ausführungsbeispiels eines erfindungsgemäßen Spulenkörpers von oben,
- Fig. 1b: eine dreidimensionale Ansicht des in der Fig. 1a gezeigten Spulenkörpers von unten,
- Fig. 2: sieben der in Fig. 1 gezeigten Spulenkörper in einer Bewicklungsanordnung,
- Fig. 3: drei Spulenstränge mit jeweils sieben Spulenkörpern in einer Bestückungsanordnung,
- Fign. 4a - 4e: verschiedene Ausgestaltungen von magnetischen Rückschlusskörpem, worauf die erfindungsgemäßen Spulenkörper in der Bestückungsanordnung angeordnet werden,
- Fig. 5a: eine dreidimensionale Ansicht eines zweiten Ausführungsbeispiels eines erfindungsgemäßen Spulenkörpers von oben,
- Fig. 5b: eine Aufsicht des in der Fig. 5a gezeigten Spulenkörpers,
- Fig. 5c: eine dreidimensionale Ansicht des in der Fig. 5a gezeigten Spulenkörpers von unten,
- Fig. 6a: eine dreidimensionale Ansicht eines dritten Ausführungsbeispiels eines erfindungsgemäßen Spulenkörpers von oben,
- Fig. 6b: eine dreidimensionale Ansicht des in der Fig. **6a** gezeigten Spulenkörpers von unten,
- Fig. 7a: eine Aufsicht des in der Fig. 5a gezeigten Spulenkörpers mit eingezeichneter Werkzeugtrennung, und
- Fig. 7b: eine Aufsicht des in der Fig. 6a gezeigten Spulenkörpers mit eingezeichneter Werkzeugtrennung.

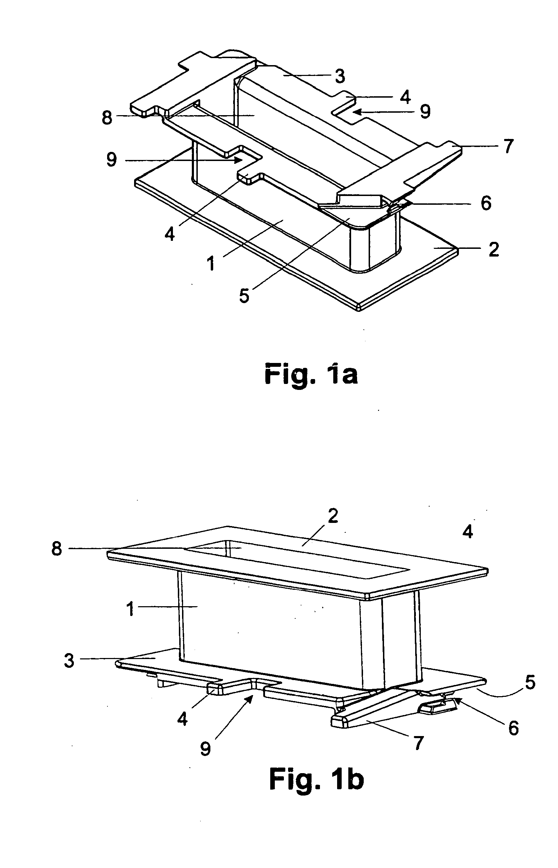

Die Fig. 1a zeigt ein erstes Ausführungsbeispiel eines erfindungsgemäßen Spulenkörpers für einen Linearmotor-Stator für eine automatische Tür in einer dreidimensionalen Ansicht von oben, d. h. mit Darstellung der Außenseite des einen Flanschs 3 des Spulenkörpers, der hier zwei Drahtaufnahmen 4, 5 aufweist, die eine bestimmte Länge eines Wickeldrahtes aufnehmen und zumindest zum Teil wieder freigeben können. Der erfindungsgemäße Spulenkörper in diesem Ausführungsbeispiel weist einen im Wesentlichen quaderförmigen Grundkörper 1 zur Aufnahme des Wickeldrahts auf seiner Außenseite und zwei den Grundkörper 1 stimseitig abschließende Flansche 2, 3 auf. Die Flansche 2, 3 haben in Aufsicht eine im Querschnitt im Wesentlichen rechteckige Grundform, die über die Stirnseiten des quaderförmigen Grundkörpers 1 hinausragt. Durch den Grundkörper 1 und die diesen stimseitig abschließenden Flansche 2, 3 verläuft ein Durchbruch 8 zur Aufnahme eines Spulenkerns bei montiertem Linearmotor-Stator bzw. zur Befestigung des Spulenkörpers auf einen Wickeldorn während der Bewicklung.

In dem gezeigten ersten Ausführungsbeispiel weist einer der den Grundkörper 1 stimseitig abschließenden Flansche 2, 3, nämlich der in der Fig. 1a oben gezeigte Flansch 3 eine erste Drahtaufnahme 4, 5 auf, um den Wickeldraht nach dem Bewickeln des Grundkörpers 1 und vor dem Bewickeln eines folgenden Spulenkörpers aufzunehmen. Der mit der ersten Drahtaufnahme 4, 5 versehene Flansch 3 weist in diesem Ausführungsbeispiel eine zweite bezüglich einer durch den Durchbruch 8 definierten Wicklungsachse zur ersten Drahtaufnahme 4, 5 um 180° versetzte Drahtaufnahme 4, 5 auf. Bei Bedarf kann die zweite Drahtaufnahme 4, 5 der Aufnahme einer bestimmten Länge des Wickeldrahts vor dem Bewickeln des Grundkörpers 1 dienen. In alternativen Ausgestaltungen kann der mit den Drahtaufnahmen 4, 5 versehene Flansch 3 auch lediglich eine oder auch mehr als zwei Drahtaufnahmen aufweisen. Weiter kann auch der in diesem Ausführungsbeispiel nicht mit einer Drahtaufnahme versehene Flansch 2 eine oder mehrere Drahtaufnahmen aufweisen, um eine noch einfachere Bestückung des Wickelautomaten und/oder die Aufnahme größerer Drahtlängen des Wickeldrahts zu ermöglichen.

Jede Drahtaufnahme 4, 5 des gezeigten Ausführungsbeispiels des erfindungsgemäßen Spulenkörpers besteht aus einer Haltevorrichtung 4 und einer Aufnahmeführung 5. Die Aufnahmeführung 5 bewirkt, dass der in die Drahtaufnahme 4, 5 einlaufende Wickeldraht auch tatsächlich in diese einläuft und nicht weiter auf den Grundkörper 1 gewickelt wird. In der gezeigten Ausführungsform besteht die Aufnahmeführung 5 aus einer schrägen Fläche, durch die der Flansch 3 verjüngt wird. Durch die schräge Fläche wird eine Ecke des Flanschs 3 dreieckförmig abgeflacht, so dass der in die Drahtaufnahme 4, 5 einlaufende Wickeldraht leichter von dem Grundkörper 1 weg nach außen auf den Flansch 3 geführt wird. Die Haltevorrichtung 4 besteht in dieser Ausführungsform aus einer über den Flansch 3 hervorstehenden Nase 4, um die der Wickeldraht nach der Bewicklung des Grundkörpers 1 und der Führung durch die Aufnahmeführung 5 gelegt wird.

Wicklungstechnisch vor der Aufnahmeführung 5 ist in den Flansch 3 integriert eine Klemmvorrichtung 6 vorgesehen, durch die der Wickeldraht läuft, bevor er von der Aufnahmeführung 5 aufgenommen wird. Die Klemmvorrichtung 6 gibt den darin während des Wicklungsvorgangs aufgenommenen Wickeldraht nicht oder nicht ohne Überwindung eines Entnahmewiderstands frei. Dies dient zur Sicherung des Spulenendes der auf den Grundkörper 1 gewickelten Spule nach Entnahme der fertig gewickelten Spulenanordnung aus der Wickelmaschine bei der Bestückung des Linearmotor-Stators, wenn der Wickeldraht aus der Drahtaufnahme 4, 5 entnommen wird.

Weiter weist der erfindungsgemäße Spulenkörper in dieser Ausführungsform eine Draht-Zuführhilfe 7, hier in Form einer über den Flansch 3 hervorstehenden Nase und einer in diese integrierte Schräge auf, die gewährleistet, dass eine Anfangsposition der auf den Grundkörper 1 gewickelten Spule definiert ist. D. h., der in die erste Spule einer Spulenanordnung einlaufende Wickeldraht wird an einer definierten Position entlang der Draht-Zuführhilfe zum Grundkörper 1 geführt und anschließend mit einer bestimmten Anzahl von Windungen auf den Grundkörper 1 gewickelt, bis er durch die Klemmvorrichtung 6 derart von der Drahtaufnahme 4, 5 aufgenommen wird, dass er zunächst die Aufnahmeführung 5 durchläuft und anschließend von der Haltevorrichtung 4, hier der über den Flansch 3 hervorstehenden Nase 4, aufgenommen wird. Anschließend wird der Wickeldraht wiederum in einer definierten Position entlang der Draht-Zuführhilfe 7 des nächsten Spulenkörpers geführt, um anschließend deren Grundkörper 1 zu bewickeln. Dieses Verfahren wird fortgesetzt, bis alle Spulenkörper der Spulenanordnung bewickelt sind.

Der erfindungsgemäße Spulenkörper in dieser Ausführungsform weist weiter eine Führungsvorrichtung 9 in Form einer in dem Flansch 3 vorgesehenen Ausnehmung auf, in die die Nase 4 der Haltevorrichtung eines benachbarten Spulenkörpers so eingreifen kann, dass die benachbarten Spulenkörper definiert zueinander ausgerichtet sind.

In dem gezeigten Ausführungsbeispiel sind nicht nur die Drahtaufnahmen 4, 5, sondern ebenfalls die Klemmvorrichtung 6, die Draht-Zuführhilfe 7 und die Führungsvorrichtung 9 entsprechend zweifach in dem Flansch 3 ausgebildet.

Fig. 1b zeigt den in Fig. 1a von oben gezeigten Spulenkörper von unten, d. h., mit einer Ansicht auf die Außenseite des nicht mit den Drahtaufnahmen 4, 5 versehenen, den Grundkörper 1 stimseitig abschließenden Flanschs 2. Hier ist zu erkennen, dass der Durchbruch 8 auch durch diesen Flansch 2 verläuft.

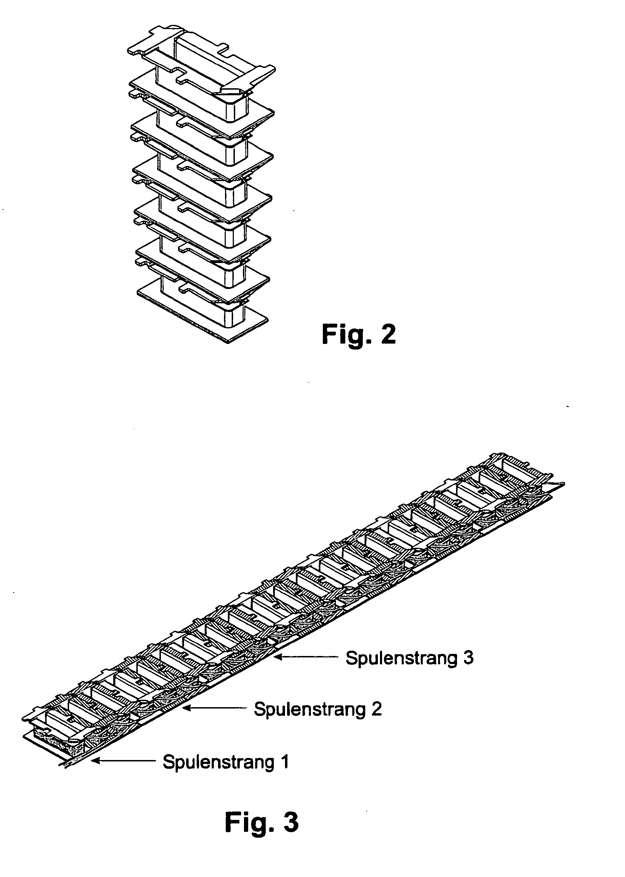

Die Fig. 2 zeigt sieben erfindungsgemäße Spulenkörper gemäß dem in Fig. 1 gezeigten ersten Ausführungsbeispiel in Bewicklungsanordnung, d. h., so aufeinander gestapelt, dass sie mit ihren Durchbrüchen 8 auf einen Wickeldorn gesteckt werden können, wobei der jeweilige mit zwei Drahtaufnahmen versehene Flansch 3 eines Spulenkörpers auf einem nicht mit den Drahtaufnahmen 4, 5 versehenen Flansch 2 eines benachbarten Spulenkörpers liegt.

Die Fig. 3 zeigt drei aus jeweils sieben bewickelten Spulenkörpern bestehende Spulenstränge in Bestückungsanordnung, d. h., mit in einer Ebene aneinander anstoßend liegenden, mit jeweiligen Drahtaufnahmen 4, 5 versehenen Flanschen 3, bei denen die Nase 4 der Haltevorrichtung jeweils in die Führungsvorrichtung 9 eines benachbarten Spulenkörpers eingreift. Nicht schraffierte bzw. mit der gleichen Schraffur versehene Spulenkörper gehören zu einem Spulenstrang und waren beim Bewickeln jeweils gemäß Figur 2 angeordnet.

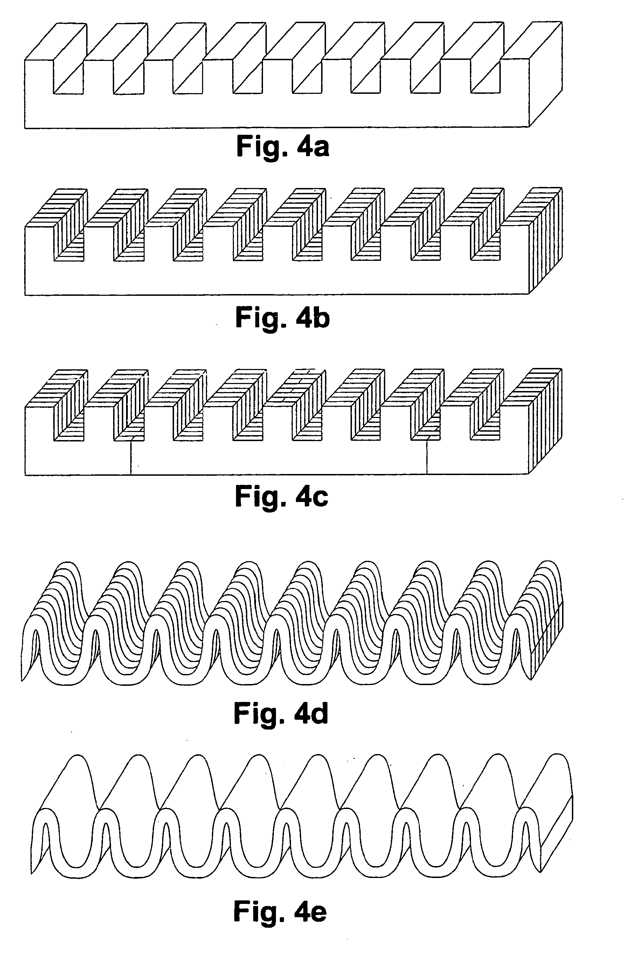

Die Fign. 4a - 4e zeigen verschiedene Ausgestaltungen von magnetisierbaren Rückschlusskörpern, worauf die erfindungsgemäßen Spulenkörper in der Bestückungsanordnung angeordnet werden. In der Fig. 4a ist eine Ausgestaltung aus einem Vollmaterial gezeigt. Die Fig. 4b zeigt eine geblechte Ausgestaltung, bei der der Rückschlusskörper aus einem Blechpaket aus gleichen Einzelblechen besteht. Die Fig. 4c zeigt einen geblechten Rückschlusskörper, bei dem gegeneinander versetzte Einzelbleche verwendet sind, wobei die einzelnen aufeinander gestapelten Blechlagen abwechselnd aus zwei oder drei Einzelblechen bestehen. Die Fig. 4d zeigt einen Rückschlusskörper, der aus gebogenen Drähten besteht. Der in Fig. 4d gezeigte Rückschlusskörper kann auch, wie in Fig. 4e gezeigt, einstückig ausgebildet sein.

Bei der Fertigung werden die Rückschlusskörper mit den bewickelten Spulenkörpers bestückt und anschließend in eine Vergusswanne eingelegt, bevor die Vergusswanne mit einem Kunstharz aufgefüllt wird.

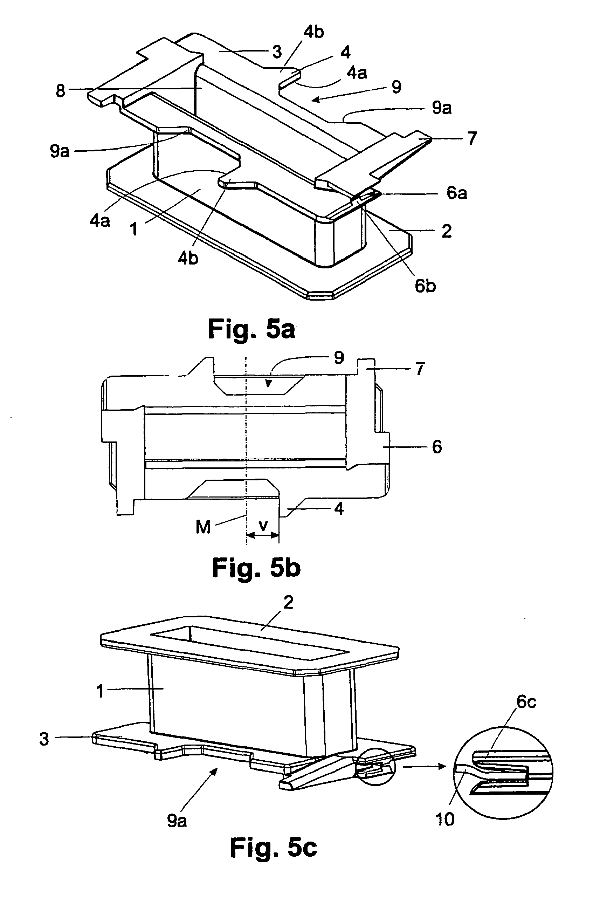

Die Fig. 5a bis 5c zeigen ein zweites Ausführungsbeispiel eines erfindungsgemäßen Spulenkörpers. Hierbei zeigen Fig. 5a eine dreidimensionale Ansicht des Spulenkörpers von oben und Fig. 5c eine dreidimensionale Ansicht des in der Fig. 5a gezeigten Spulenkörpers von unten. Im Unterschied zu dem in Fig. 1 gezeigten Spulenkörper weist hier die Nase 4 einen Stützbereich 4b auf, der hinsichtlich einem Führungsbereich 4a, entlang dem der Wickeldraht geführt wird, auf der Rückseite der Nase 4 angeordnet ist und die Nase 4 gegen ein Abscheren beim Wickeln und andere ähnliche Belastungen besser sichert. Der Stützbereich 4b ist prinzipiell eine Vergrößerung der Nase 4, die hier im Fußbereich der Nase 4, mit dem die Nase 4 an dem Flansch 3 angeschlossen ist, stärker und zur Spitze der Nase 4 hin sich verjüngend ausgestaltet ist.

Die Fig. 5b zeigt eine Aufsicht des in der Fig. 5a gezeigten Spulenkörpers, wobei ein Versatz v der Nase 4, genauer des Führungsbereichs 4a der Nase 4, gegenüber einer senkrechten Mittellinie M eingezeichnet ist, durch welchen Versatz v die freie Drahtlänge zwischen zwei Einzelspulen definiert wird.

Die aus einer Ausnehmung 9 bestehende Führungsvorrichtung ist an die Form und Position der Nase 4 angepasst, d. h. weist eine an den Stützbereich 4b angepasst Anlagekante 9a auf, an der der Stützbereich eines in der Bestückungsanordnung benachbarte Spulenkörpers anliegt und die beiden benachbarten Spulenkörper zueinander ausrichtet.

Weiter ist in den Fig. 5a und 5c die Klemmvorrichtung detailliert dargestellt. Insbesondere ist eine Drahtführung 6a der Klemmvorrichtung 6 zu erkennen, in die der Wickeldraht 10 eingelegt wird. Das Einlegen erfolgt zwischen vorzugsweise zwei Widerhaken 6b der Klemmvorrichtung 6 hindurch, die gewährleisten, dass ein leichtes Einlegen ohne großen Widerstand erfolgen kann. Anstelle von zwei Widerhaken 6b kann auch nur ein Widerhaken 6b vorgesehen sein. Eine gegenüberliegende Seite, an der sonst der zweite Widerhaken 6b zu finden wäre, ist im Wesentlichen eben ausgeführt. Mit derartigen Widerhakenanordnungen wird ferner gewährleistet, dass eine Entnahme des Wickeldrahts 10 aus der Drahtführung 6a nicht oder nur unter Überwindung eines Entnahmewiderstands erfolgen kann Der Entnahmewiderstand entsteht aufgrund des in bezug auf einen Außendurchmesser des Wickeldrahts 10 geringeren Abstands des einen Widerhakens 6b zu seiner gegenüberliegenden Seite bzw. der beiden gegenüberliegenden Widerhaken 6b zueinander. Ausgangsseitig ist an der Klemmvorrichtung eine Abrundung 6c vorgesehen, damit der Wickeldraht beim Wickelvorgang nicht versehentlich abkantet.

Als weiterer Unterschied zu dem in der Fig. 1 gezeigten ersten Ausführungsbeispiel ist in dem zweiten Ausführungsbeispiel des erfindungsgemäßen Spulenkörpers die Aufnahmeführung 5 der Drahtaufnahme nicht vorgesehen, um hier den Flansch 3 nicht zu schwächen.

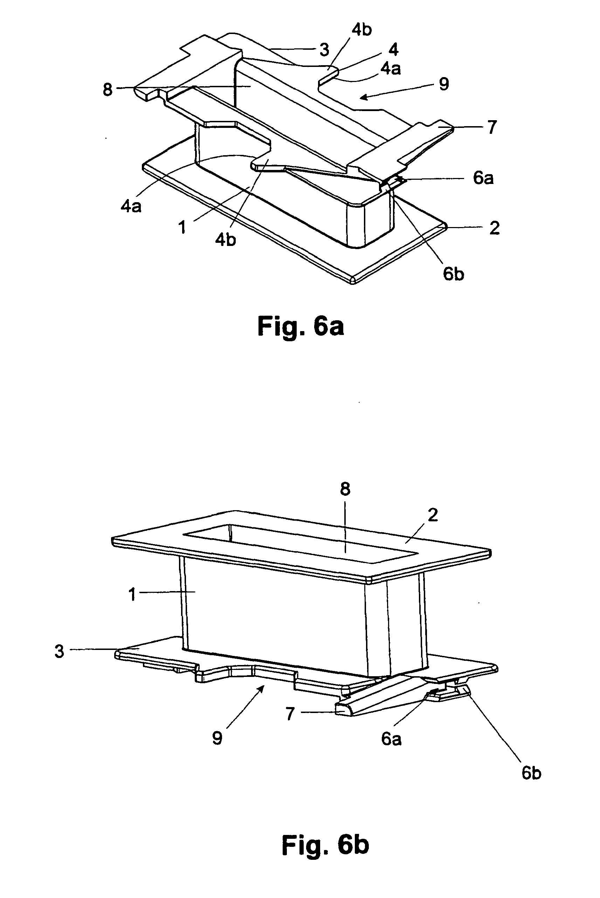

Die Fig. 6a zeigt eine dreidimensionale Ansicht eines dritten Ausführungsbeispiels eines erfindungsgemäßen Spulenkörpers von oben, und die Fig. 6b zeigt eine dreidimensionale Ansicht des in der Fig. 6a gezeigten Spulenkörpers von unten. Im Unterschied zu dem in Fig. 5 gezeigten zweiten Ausführungsbeispiel ist die Aufnahmeführung 5 der Drahtaufnahme nicht weggelassen, sondern von dem Ausgang der Klemmvorrichtung 6 bis zur Nase 4 geradlinig verlaufend vergrößert, sodass ein aus der Klemmvorrichtung heraus verlaufender Wickeldraht direkt an die Haltevorrichtung der Drahtaufnahme, also die Nase 4, geführt wird.

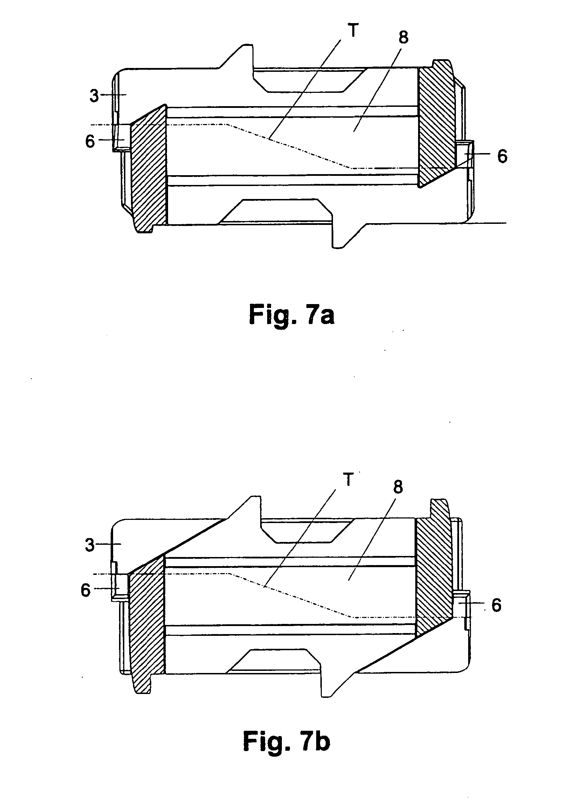

Die Fig. 7a zeigt eine Aufsicht des in der Fig. 5a gezeigten Spulenkörpers mit eingezeichneter Werkzeugtrennung, und die Fig. 7b zeigt eine Aufsicht des in der Fig. 6a gezeigten Spulenkörpers mit eingezeichneter Werkzeugtrennung. Diese Werkzeugtrennungen T bezeichnet die Trennlinie zwischen zwei Teilen einer Spritzgussform, mit der der jeweilige Spulenkörper gefertigt wird. Die Form des jeweiligen Spulenkörpers und der Trennlinie sind so gewählt, dass es möglich ist, abgesehen von dem notwendigen Werkzeugteil zum Ausbilden der Aushöhlung zur Aufnahme des Rückschlusskörpers, eine zweiteilige Spritzgussform zu verwenden. Eine Hälfte der Spritzgussform kann sozusagen frontal auf die andere Hälfte zu und von ihr weg bewegt werden, d. h. in den Zeichnungen in vertikaler Richtung. Hierfür verläuft die jeweilige Werluzeugtrennung T großteils über den jeweiligen Durchbruch 8 und ansonsten senkrecht durch die Seitenwände des im Wesentlichen quaderförmigen Grundkörpers 1 und der im Wesentlichen rechteckigen Flansche 2, 3, die mit den Klemmvorrichtungen 6 versehen sind, wobei die Werkzeugtrennung T diese Seitenwände jeweils im Bereich der Klemmvorrichtungen 6 schneidet. Der hierdurch bezüglich einer waagerechten Mittellinie entstehende Versatz wird durch eine diagonale Verbindung im Bereich des Durchbruchs 8 ausgeglichen.

Diese Art der Werkzeugtrennung T hat einen Kostenvorteil zum einen in der Verwendung lediglich zweier Hälften und zum anderen darin, dass Maschinen, die Spritzgussformteile in verschiedenen Winkeln heranführen oder wegbewegen können, sehr teurer sind.

Der erfindungsgemäße Spulenkörper ermöglicht also ein automatisiertes Bewickeln mit einem Wickeldraht, z. B. Cu-Lackdraht, zur Anfertigung eines Spulenstrangs, wobei eine Draht-Zuführhilfe 7 am Spulenkörper in Form einer Nase mit einer Zuführschräge vorgesehen ist. Weiter weist der erfindungsgemäße Spulenkörper bevorzugt eine Klemmvorrichtung 6 auf, um die letzte Drahtwicklung zu fixieren. Zur Realisierung der richtigen Drahtlänge zwischen den Spulen ist eine Drahtaufnahme 4, 5 vorgesehen, und zur Aufnahme und Fixierung von Kemblechen eines magnetischen Rückschlusskörpers im Spulenkörper-Innenraum ist ein Durchbruch 8 vorgesehen. Durch die Ausgestaltung der den Grundkörper 1 stimseitig abschließenden Flansche 2, 3, die über den Grundkörper 1 und auch die fertig gewählten Spulen hervorstehen, erfolgt eine elektrische Isolierung der Wicklung von Kemblechen, die vorzugsweise den magnetisierbaren Rückschlusskörper bilden.

Der erfindungsgemäße Spulenkörper wird vorzugsweise als Spritzgussteil gefertigt, wobei ein Kunststoff mit guten Spritzguss-Eigenschaften z. B. PA6-30H natur verwendet wird. Der Werkstoff sollte dauerwärmefest bis 130°C und schwer entflammbar sein.

Z. B. jeweils sieben Spulenkörper werden zu einem Spulenstrang verarbeitet. Hierzu werden die Spulenkörper auf einen Wickeldorn übereinander fixiert, wie es in Fig. 2 gezeigt ist, und in einem Arbeitsgang automatisiert bewickelt. Der Draht wird über die Einlaufschräge der Draht-Zuführhilfe 7 zum Spulenkörper-Grund, d. h., der Außenseite des Grundkörpers 1 geführt und die letzte Wicklung jeder Einzelspule rastet automatisch in die Klemmvorrichtung 6 am Spulenkörper-Rand, d. h., auf dem mit der Drahtaufnahme 4, 5 versehenen Flansch 3 ein und wird hierdurch fixiert. Beim Übergang einer Einzelspule zur nächsten wird eine freie Drahtlänge, z. B. ca. 35 mm, realisiert, um die Spulen später in einem bestimmten Muster mit ineinander verschachtelten Einzelspulen der Spulenstränge anordnen zu können. Hierzu ist die Drahtaufnahme 4, 5 in Form einer Ausstülpung oder Nase an dem mit der Drahtaufnahme 4, 5 versehenen Flansch 3 angebracht.

Alternativ zu dieser Nase kann auch eine Kerbe oder Nut vorgesehen sein.

Die von der Drahtaufnahme aufgenommene Drahtlänge ist vorzugsweise so bemessen, dass sich je zwei weitere Einzelspulen zwischen die benachbarten Spulen eines Spulenstrangs montieren lassen, wie es in Fig. 3 gezeigt ist.

### Bezugszeichenliste

- 1: Grundkörper
- 2: Flansch ohne Drahtaufnahme
- 3: Flansch mit Drahtaufnahme
- 4: Haltevorrichtung der Drahtaufnahme
- 4a: Führungsbereich der Haltevorrichtung
- 4b: Stützbereich der Haltevorrichtung
- 5: Aufnahmeführung der Drahtaufnahme
- 6: Klemmvorrichtung
- 6a: Drahtführung der Klemmvorrichtung
- 6b: Widerhaken der Klemmvorrichtung
- 6c: Abrundung der Klemmvorrichtung
- 7: Draht-Zuführhilfe
- 8: Durchbruch
- 9: Führungsvorrichtung
- 9a: Anlagekante der Führungsvorrichtung
- 10: Wickeldraht

- v: Versatz
- M: senkrechte Mittellinie
- T: Werkzeugtrennung

## Patentansprüche

1. Verfahren zum Bewickeln von Spulenkörpern für einen Linearmotor-Stator für eine automatische Tür, aufweisend einen Schritt eines gemeinsamen aufeinander folgenden ununterbrochenen Bewickelns mehrerer in einer Bewicklungsanordnung nebeneinander angeordneter Spulenkörper, die jeweils wenigstens eine Drahtaufnahme (4, 5) aufweisen, die
• den Wickeldraht vor und/oder nach einem Bewickeln des Grundkörpers (1) des jeweiligen Spulenkörpers aufnimmt und
• nach einem Abschluss des gemeinsamen aufeinander folgenden ununterbrochenen Bewickelns der mehreren Spulenkörper, zumindest zum Teil wieder freigibt, sodass zwischen bewickelten Spulenkörpern eine bestimmte freie Drahtlänge gegeben ist, die sich aus dem freigegebenen Teil des von der Drahtaufnahme (4, 5) aufgenommenen Wickeldrahtes und einem Stück Wickeldraht ergibt, das beim aufeinander folgenden Bewickeln von zwei Spulenkörpern zwischen diesen besteht, so dass die mehreren gemeinsam bewickelten Spulenkörpern zur Fertigung des Linearmotor-Stators in eine zur Bewicklungsanordnung unterschiedliche Bestückungs-Anordnung bringbar sind, ohne den Wickeldraht zu zertrennen.

2. Spulenkörper für einen Linearmotor-Stator für eine automatische Tür,
• gestaltet nach Anspruch 1,
• eingerichtet, im Verfahren nach Anspruch 1 verwendet zu werden und
• wobei der Stator eine Spulenanordnung aufweist, die bei entsprechender Ansteuerung eine Wechselwirkung mit einem Linearmotor-Läufer bewirken kann, die Vorschubkräfte hervorruft,
• wobei der Spulenkörper
- einen Grundkörper (1) zur Aufnahme des Wickeldrahtes, um eine Spule zu bilden, und
- wenigstens einen den Grundkörper (1) stimseitig abschließenden Flansch (2, 3) aufweist, wobei
• wenigstens ein Flansch (3) des Spulenkörpers wenigstens eine Drahtaufnahme (4, 5) aufweist, die
- eingerichtet ist, die bestimmte Länge des Wickeldrahtes
• vor und/oder nach einem Bewickeln des Grundkörpers (1) aufzunehmen und
• nach dem Abschluss eines gemeinsamen aufeinander folgenden ununterbrochenen Bewickelns mehrerer in einer Bewicklungsanordnung nebeneinander angeordneter Spulenkörper zumindest zum Teil wieder freizugeben, so dass zwischen dem Spulenkörper und einem zweiten, unmittelbar benachbarten und mit demselben Wickeldraht, also gemeinsam, bewickelten Spulenkörper eine bestimmte freie Drahtlänge gegeben ist, die sich aus der bestimmten Länge des Vllickeldrahtes und einem Stück Wickeldraht ergibt, das beim aufeinander folgenden Bewickeln des Spulenkörpers und des zweiten Spulenkörpers zwischen beiden Spulenkörpern besteht so dass die mehreren gemeinsam bewickelten Spulenkörper zur Fertigung des Linearmotor-Stators in eine zur Bewicklungsanordnung unterschiedliche Bestückungs-Anordnung bringbar sind, ohne den Wickeldraht zu zertrennen, sowie
- wenigstens eine Haltevorrichtung (4) aufweist, die eingerichtet ist, zumindest einen Teil des von der Drahtaufnahme (4, 5) aufgenommenen Wickeldrahts ohne Überwindung eines Entnahmewiderstands freizugeben.

3. Spulenkörper nach Anspruch 2, **dadurch gekennzeichnet, dass** die Haltevorrichtung (4) wenigstens eine über den mit der wenigstens einen Haltevorrichtung (4) versehenen Flansch hervorstehende Nase (4) aufweist, entlang der oder um die der Wickeldraht geführt werden kann.

4. Spulenkörper nach Anspruch 3, **dadurch gekennzeichnet, dass** die wenigstens eine Nase (4) einen Führungsbereich (4a), entlang dem oder um den der Wickeldraht geführt werden kann, und einen Stützbereich (4b) aufweist, der eine von dem Führungsbereich (4a) her auf die Nase wirkende Kraft aufnehmen kann.

5. Spulenkörper nach einem der Ansprüche 2 bis 4, **dadurch gekennzeichnet, dass** die Haltevorrichtung (4) wenigstens eine Nut aufweist, entlang der der Wickeldraht geführt werden kann.

6. Spulenkörper nach einem der Ansprüche 2 bis 5, **dadurch gekennzeichnet, dass** die Drahtaufnahme (4, 5) eine Aufnahmeführung (5) aufweist, die eingangsseitig angeordnet ist, um eine Führung des Wickeldrahts innerhalb der Drahtaufnahme (4, 5) zu unterstützen.

7. Spulenkörper nach Anspruch 6, **dadurch gekennzeichnet, dass** die Aufnahmeführung (5) aus einer Ausnehmung des wenigstens einen Flansches (2, 3) besteht, wodurch der Flansch (2, 3) eine Fläche mit verringerter Materialstärke aufweist.

8. Spulenkörper nach einem der Ansprüche 2 bis 5 und einem der Ansprüche 6 und 7, **dadurch gekennzeichnet, dass** die Ausnehmung des wenigstens einen Flansches (2, 3), durch die der Flansch (2, 3) eine Fläche mit verringerter Materialstärke aufweist, eine direkte geradlinige Führung von einer Eingangsseite der Drahtaufnahme zu der Haltevorrichtung (4) bewirkt.

9. Spulenkörper nach einem der Ansprüche 2 bis 8, **gekennzeichnet durch** eine Klemmvorrichtung (6), die an dem wenigstens einen Flansch (3) angeordnet ist, der eine Drahtaufnahme (4, 5) aufweist, um ein Ende der Spule zu definieren und einen darin aufgenommenen Wickeldraht nicht oder nicht ohne Überwindung eines Entnahmewiderstands freizugeben.

10. Spulenkörper nach Anspruch 9, **dadurch gekennzeichnet, dass** eine Richtung, in der der Wickeldraht durch die Klemmvorrichtung (6) geführt wird, parallel zu einer Richtung ist, in der der Grundkörper (1) bewickelt wird, und sich die Klemmvorrichtung (6) mit ihrer Ausgangsseite an eine Eingangsseite der Drahtaufnahme (4, 5) anschließt.

11. Spulenkörper nach Anspruch 9 oder 10, **dadurch gekennzeichnet, dass** die Klemmvorrichtung (6) eine Drahtführung (6a) und zumindest einen Widerhaken (6b) aufweist, wobei ein Wickeldraht mit geringem oder keinem Widerstand an dem zumindest einem Widerhaken (6b) vorbei in die Drahtführung (6a) eingelegt werden kann und nicht oder nur entgegen den Entnahmewiderstand gegen die Wirkung des zumindest einen Widerhakens (6b) und einer ihm gegenüberliegenden Fläche aus der Drahtführung (6a) entnommen werden kann.

12. Spulenkörper nach Anspruch 11, **dadurch gekennzeichnet, dass** die Klemmvorrichtung (6) zwei Widerhaken (6b) aufweist, wobei der Wickeldraht mit geringem oder keinem Widerstand an den zwei Widerhaken (6b) vorbei in die Drahtführung (6a) eingelegt werden kann und nicht oder nur entgegen den Entnahmewiderstand gegen die Wirkung der zwei Widerhaken (6b) entnommen werden kann.

13. Spulenkörper nach Anspruch 11, **dadurch gekennzeichnet, dass** die Drahtführung (6a) ausgangsseitig eine Abrundung (6c) aufweist, entlang der ein Wickeldraht aus der Klemmvorrichtung (6) geführt wird.

14. Spulenkörper nach einem der Ansprüche 2 bis 13, **gekennzeichnet durch** eine Draht-Zuführhilfe (7), die an dem wenigstens einen Flansch (3) angeordnet ist, der eine Drahtaufnahme (4, 5) aufweist, um einen Anfang der Spule zu definieren.

15. Spulenkörper nach einem der Ansprüche 2 bis 14, **dadurch gekennzeichnet, dass** der wenigstens eine Flansch (3), der eine Drahtaufnahme (4, 5) aufweist, so rotationssymmetrisch bezüglich einer Wickelachse des Spulenkörpers ausgestaltet ist, dass darauf insgesamt zwei Drahtaufnahmen (4, 5) vorgesehen sind.

16. Spulenkörper nach einem der Ansprüche 2 bis 15, **dadurch gekennzeichnet, dass** der Grundkörper (1) und der wenigstens eine den Grundkörper (1) stimseitig abschließende Flansch (2, 3) einen Durchbruch (8) für einen Spulenkern aufweisen, wodurch mehrere Spulenkörper zu einem gemeinsamen aufeinander folgenden Bewickeln auf einem durch ihre Durchbrüche (8) geführten Wickeldorn fixiert werden können.

17. Spulenkörper nach einem der Ansprüche 2 bis 16, **dadurch gekennzeichnet, dass** wenigstens ein Flansch (2, 3) wenigstens eine Führungsvorrichtung (9) aufweist, die gewährleistet, dass in einer Bestückungsanordnung aneinander anstoßender, direkt nebeneinander liegender Spulenkörper, deren korrespondierende Flansche (2, 3) in einer Ebene liegen, definiert zueinander ausgerichtet sind.

18. Spulenkörper nach Anspruch 17, **dadurch gekennzeichnet, dass** die wenigstens eine Führungsvorrichtung (9) eine in dem wenigstens einen Flansch (2, 3) ausgebildete Aussparung (9) aufweist, in die ein Vorsprung (4) eines in einer Bestückungsanordnung direkt benachbarten Spulenkörpers eingreifen kann.

19. Spulenkörper nach Anspruch 18 und einem der Ansprüche 2 bis 5, **dadurch gekennzeichnet, dass** der Vorsprung mittels der Haltevorrichtung (4) gebildet ist.

## Claims

1. A method for winding coil formers for a linear motor stator for an automatic door, including a step of a collective consecutive uninterrupted winding of several coil formers being disposed next to each other in a winding arrangement and having at least one wire reception (4, 5), which
• receives the winding wire prior to and/or after winding the body (1) of the respective coil former, and
• releases, after terminating the collective consecutive uninterrupted winding of the several coil formers, at least part of the wire, such that a predetermined free wire length is given between wound coil formers, resulting from the released portion of the winding wire received in the wire reception (4, 5) and from a portion of winding wire which exists between two coil formers when they are consecutively wound, such that, for manufacturing the linear motor stator, the several collectively wound coil formers can be brought into an equipping arrangement, which is different from the winding arrangement, without having to sever the winding wire.

2. The coil former for a linear motor stator for an automatic door,
• configured according to claim 1,
• adapted to be utilized in the method according to claim 1, and
• wherein the stator has a coil arrangement, which, upon appropriate activation is able to produce an interaction with a linear motor rotor, which causes thrust forces,
• wherein the coil former includes
- a body (1) for the reception of the winding wire in order to form a coil, and
- at least one flange (2, 3) terminating the body (1) at the front side, wherein
• at least one flange (3) of the coil former includes at least one wire reception (4, 5), which
- is adapted to receive the pre-determined length of the winding wire
○ prior to and/or after winding the body (1), and
○ after terminating a collective consecutive uninterrupted winding of several coil formers being disposed next to each other in a winding arrangement, releases at least a part of the wire, such that between the coil former and a second coil former, directly adjacent to the first one and being wound with the same winding wire, namely collectively wound coil former, a pre-determined free wire length is given, which results from the pre-determined length of the winding wire and a portion of the winding wire, which exists between both coil formers during the consecutive winding of the coil former and the second coil former, such that the several collectively wound coil formers for manufacturing the linear motor stator can be brought into an equipping arrangement which is different from the winding arrangement without severing the winding wire, as well as
- at least one holding device (4), which is adapted to release at least one portion of the winding wire received by the wire reception (4, 5), without having to overcome a release resistance.

3. The coil former according to claim 2, **characterized in that** the holding device (4) has at least one nose (4), protruding beyond the flange provided with the at least one holding device (4), along or around which nose (4) the winding wire can be guided.

4. The coil former according to claim 3, **characterized in that** the at least one nose (4) has a guiding area (4a), along or around which the winding wire can be guided, and a support area (4b), which can absorb a force originating from the guiding area (4a) and acting on the nose.

5. The coil former according to one of the claims 2 to 4, **characterized in that** the holding device (4) has at least one groove, along which the winding wire can be guided.

6. The coil former according to one of the claims 2 to 5, **characterized in that** the wire reception (4, 5) has a reception guide (5), which is disposed on the entry side, in order to assist in guiding the winding wire within the wire reception (4, 5).

7. The coil former according to claim 6, **characterized in that** the reception guide (5) consists of a recess of the at least one flange (2, 3), whereby the flange (2, 3) has a surface with reduced material thickness.

8. The coil former according to one of the claims 2 to 5 and one of the claims 6 and 7, **characterized in that** the recess of the at least one flange (2, 3), by means of which the flange (2, 3) has a surface with reduced material thickness, causes a direct rectilinear guidance from an entry side of the wire reception to the holding device (4).

9. The coil former according to one of the claims 2 to 8, **characterized by** a clamping device (6), which is disposed at the at least one flange (3) which has a wire reception (4, 5), in order to define one end of the coil and not to release a winding wire received therein or not to release it without having to overcome a release resistance.

10. The coil former according to claim 9, **characterized in that** a direction, in which the winding wire is guided by means of the clamping device (6), is parallel to a direction in which the body (1) is wound, and **in that** the clamping device (6), with its exit side, adjoins an entry side of the wire reception (4, 5).

11. The coil former according to claim 9 or 10, **characterized in that** the clamping device (6) has a wire guide (6a) and at least one barb (6b), wherein a winding wire is able to be introduced into the wire guide (6a) with little or no resistance at all while passing the at least one barb (6b), and is not removable or only removable from the wire guide (6a) against the release resistance, i.e. against the effect of the at least one barb (6b) and a surface opposite the barb.

12. The coil former according to claim 11, **characterized in that** the clamping device (6) has two barbs (6b), wherein the winding wire is able to be introduced into the wire guide (6a) with little or no resistance at all while passing the two barbs (6b), and is not removable or is only removable against the release resistance, i.e. against the effect of the two barbs (6b).

13. The coil former according to claim 11, **characterized in that** the wire guide (6a) has a rounding (6c) on the exit side, along which a winding wire is guided out of the clamping device (6).

14. The coil former according to one of the claims 2 to 13, **characterized by** a wire feed assistance (7), which is disposed at the at least one flange (3) which has a wire reception (4, 5), in order to define a beginning of the coil.

15. The coil former according to one of the claims 2 to 14, **characterized in that** the at least one flange (3) which has a wire reception (4, 5), is configured to be rotationally symmetric with regard to a winding axis of the coil former such that altogether two wire receptions (4, 5) are provided thereon.

16. The coil former according to one of the claims 2 to 15, **characterized in that** the body (1) and the at least one flange (2, 3) terminating the body (1) at the front side have a break-through (8) for a coil core, whereby, for a collective consecutive winding, several coil formers can be fixed on a winding mandrel which passes through their break-throughs (8).

17. The coil former according to one of the claims 2 to 16, **characterized in that** at least one flange (2, 3) has at least one guiding device (9), which guarantees that, in an equipping arrangement directly adjacent coil formers, abutting each other, are aligned with each other in a defined manner, their corresponding flanges (2, 3) being located in one plane.

18. The coil former according to claim 17, **characterized in that** the at least one guiding device (9) has a cut-out (9) configured in the at least one flange (2, 3), into which a projection (4) of a directly adjacent coil former in an equipping arrangement is able to engage.

19. The coil former according to claim 18 and one of the claims 2 to 5, **characterized in that** the projection is formed by means of the holding device (4).

## Revendications

1. Procédé pour bobiner des corps de bobine pour un stator d'un moteur linéaire pour une porte automatique, comprenant une étape d'un embobinage en commun, successif et ininterrompu de plusieurs corps de bobine, qui sont agencés les uns à côté des autres dans un agencement d'embobinage et présentent chacun au moins une réception de fil (4, 5), qui
• reçoit le fil de bobinage avant et/ou après le bobinage du corps de base (1) du corps de bobine respectif, et
• après avoir terminé l'embobinage commun, successif et ininterrompu de plusieurs corps de bobine, relâche au moins une portion du fil, de sorte qu'une certaine longueur de fil libre est donnée entre des corps de bobine embobinés, qui résulte de la portion libérée du fil de bobinage reçu par la réception de fil (4, 5) et une partie de fil de bobinage qui existe entre deux corps de bobine lorsqu'ils sont bobinés successivement, de sorte que les multiple corps de bobine embobinés en commun pour la fabrication du stator d'un moteur linéaire peuvent être agencés en un agencement de montage qui est différent de l'agencement d'embobinage, et cela sans couper le fil de bobinage.

2. Corps de bobine pour un stator d'un moteur linéaire pour une porte automatique,
• aménagé selon la revendication 1,
• arrangé pour être utilisé dans le procédé selon la revendication 1, et
• le stator comprenant un agencement de bobines, qui, sous l'effet d'une activation appropriée, peut effectuer une interaction avec un rotor du moteur linéaire produisant des forces d'avance,
• tandis que le corps de bobine comprend
- un corps de base (1) pour recevoir le fil de bobinage pour constituer une bobine, et
- au moins une bride (2, 3) terminant la face frontale du corps de base (1), tandis que
• au moins une bride (3) du corps de bobine comprend au moins une réception de fil (4, 5), qui
- est arrangée pour recevoir la longueur de fil de bobinage prédéterminée
○ avant et/ou après avoir embobiné le corps de base (1), et
○ après avoir terminé l'embobinage commun, successif et ininterrompu de plusieurs corps de bobine agencés les uns à côté des autres dans un agencement d'embobinage, de relâcher au moins une portion du fil, de sorte qu'une certaine longueur de fil libre est donnée entre le corps de bobine et un deuxième corps de bobine directement avoisinant et embobiné avec le même fil de bobinage, c'est-à-dire embobinés ensemble, laquelle longueur résulte de la longueur prédéterminée du fil de bobinage et une partie de fil de bobinage qui existe lors de l'embobinage successif du corps de bobine et du deuxième corps de bobine entre les deux corps de bobine de sorte que les multiple corps de bobine embobinés ensemble pour la fabrication du stator d'un moteur linéaire peuvent être agencés en un agencement de montage qui est différent de l'agencement d'embobinage sans couper le fil de bobinage, et qui
- comprend au moins un dispositif de retenue (4), qui est arrangé pour libérer au moins une portion du fil de bobinage reçu par la réception de fil (4, 5) sans avoir à dépasser une résistance de prélèvement.

3. Corps de bobine selon la revendication 2, **caractérisé en ce que** le dispositif de retenue (4) comprend au moins un taquet (4) faisant saillie de la bride équipée avec ledit au moins un dispositif de retenue (4), le long ou autour duquel taquet le fil de bobinage peut être guidé.

4. Corps de bobine selon la revendication 3, **caractérisé en ce que** ledit au moins un taquet (4) comprend une section de guidage (4a) le long de laquelle ou autour de laquelle le fil de bobinage peut être guidé, et une section de support (4b) qui peut absorber une force agissant sur le taquet depuis la section de guidage (4a).

5. Corps de bobine selon l'une des revendications 2 à 4, **caractérisé en ce que** le dispositif de retenue (4) comprend au moins une rainure dans laquelle le fil de bobinage peut être guidé.

6. Corps de bobine selon l'une des revendications 2 à 5, **caractérisé en ce que** la réception de fil (4, 5) comprend un guidage de réception (5) qui est arrangé du côté de l'entrée pour assister à un guidage du fil de bobinage au sein de la réception de fil (4, 5).

7. Corps de bobine selon la revendication 6, **caractérisé en ce que** le guidage de réception (5) consiste en un creux de ladite au moins une bride (2, 3) faisant en sorte que la bride (2, 3) présente une surface de matière à épaisseur réduite.

8. Corps de bobine selon l'une des revendications 2 à 5 et l'une des revendications 6 et 7, **caractérisé en ce que** le creux de ladite au moins une bride (2, 3), à cause duquel la bride (2, 3) présente une surface de matière à épaisseur réduite, effectue un guidage direct et rectiligne depuis le côté entrée de la réception de fil vers le dispositif de retenue (4).

9. Corps de bobine selon l'une des revendications 2 à 8, **caractérisé en ce qu'**un dispositif de serrage (6) est agencé sur ladite au moins une bride (3) laquelle présente une réception de fil (4, 5), afin de définir une extrémité de la bobine et afin de ne pas libérer un fil de bobinage reçu là-dedans ou ne pas le libérer sans avoir à surmonter une résistance de prélèvement.

10. Corps de bobine selon la revendication 9, **caractérisé en ce qu'**une direction dans laquelle le fil de bobinage est guidé à travers le dispositif de serrage (6) est parallèle à une direction dans laquelle le corps de base (1) est embobiné, et **en ce que** le dispositif de serrage (6) par son côté sortie est contigu à un côté entrée de la réception de fil (4, 5).

11. Corps de bobine selon la revendication 9 ou 10, **caractérisé en ce que** le dispositif de serrage (6) comprend un guidage de fil (6a) et au moins un crochet (6b), tandis que le fil de bobinage peut être inséré dans le guidage de fil (6a) avec un peu de résistance ou pas de résistance du tout en passant par ledit au moins un crochet (6b) et ledit fil ne peut pas être prélevé ou ne peut être prélevé du guidage de fil (6a) que contre la résistance de prélèvement c'est-à-dire contre l'action dudit au moins un crochet (6b) et une surface opposée.

12. Corps de bobine selon la revendication 11, **caractérisé en ce que** le dispositif de serrage (6) comprend deux crochets (6b), tandis que le fil de bobinage peut être inséré dans le guidage de fil (6a) en passant par les deux crochets (6b) et ne peut pas être prélevé ou ne peut être prélevé que contre la résistance de prélèvement et contre l'effet des deux crochets (6b).

13. Corps de bobine selon la revendication 11, **caractérisé en ce que** le guidage (6a) comprend un arrondissage (6c) du côté sortie le long duquel un fil de bobinage est guidé en dehors du dispositif de serrage (6).

14. Corps de bobine selon l'une des revendications 2 à 13, **caractérisé par** une assistance d'alimentation de fil (7) qui est agencée sur ladite au moins une bride (3) qui comprend une réception de fil (4, 5) afin de définir un début de la bobine.

15. Corps de bobine selon l'une des revendications 2 à 14, **caractérisé en ce que** ladite au moins une bride (3), qui présente une réception de fil (4, 5), est aménagée de façon symétrique en rotation par rapport à un axe de bobinage du corps de bobine de sorte qu'en tout deux réceptions de fil (5, 6) sont prévues là-dessus.

16. Corps de bobine selon l'une des revendications 2 à 15, **caractérisé en ce que** le corps de base (1) et ladite au moins une bride (2, 3) terminant le corps de base (1) du côté de la face frontale comprennent un percement (8) pour un noyau de bobine, ce qui fait que plusieurs corps de bobine, pour être embobinés ensemble et successivement, peuvent être fixés sur un mandrin de bobinage qui passe à travers leurs percements (8).

17. Corps de bobine selon l'une des revendications 2 à 16, **caractérisé en ce que** ladite au moins une bride (2, 3) présente au moins un dispositif de guidage (9) garantissant que, dans un agencement de montage de corps de bobine butant les uns contre les autres et étant agencés directement les uns à côté des autres, les corps de bobines, dont les brides (2, 3) correspondantes sont logées dans un même plan, sont alignés de façon définie les uns par rapport aux autres.

18. Corps de bobine selon la revendication 17, **caractérisé en ce que** ledit au moins un dispositif de guidage (9) comprend un évidement (9) aménagé dans ladite au moins une bride (2, 3) dans lequel une projection (4) d'un corps de bobine directement avoisinant dans l'agencement de montage peut s'engager.

19. Corps de bobine selon la revendication 18 et l'une des revendications 2 à 5, **caractérisé en ce que** la projection est constituée au moyen du dispositif de retenue (4).
